(19) Europäisches Patentamt

European Patent Office

Office européen des brevets

(11) EP 0 997 486 B1

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(51) Int Cl.[7]: **C08G 18/64**, C08G 18/08, C08G 59/18, C09D 175/04

(21) Anmeldenummer: **99120064.3**

(22) Anmeldetag: **19.10.1999**

(54) **Ionisch oder nichtionisch stabilisierte Epoxidaddukte als wasserverdünnbare Basisharze für 2 K-Isocyanat Systeme**

Ionically or nonionically stabilized epoxide adducts as water-thinnable basic resins for two-component isocyanate systems

Produits d'addition époxyde stabilisés ioniquement ou non-ioniquement utilisés comme résines aqueuses de base pour des systèmes isocyanate à deux composants

(84) Benannte Vertragsstaaten:
**AT BE CH CY DE DK ES FI FR GB GR IE IT LI LU MC NL PT SE**

(30) Priorität: **28.10.1998 AT 179698**

(43) Veröffentlichungstag der Anmeldung:
**03.05.2000 Patentblatt 2000/18**

(73) Patentinhaber: **Surface Specialties Austria GmbH 8402 Werndorf (AT)**

(72) Erfinder:
• **Dworak, Gert, Dr.
8010 Graz (AT)**

• **Gerlitz, Martin, Dr.
8055 Graz (AT)**
• **Feola, Roland, Dr.
8045 Graz (AT)**
• **Weinberger, Manfred, Dr.
8010 Graz (AT)**

(74) Vertreter: **Deckers, Hellmuth, Dr.
European Patent Attorney,
Bahnhofstrasse 26/A
55218 Ingelheim (DE)**

(56) Entgegenhaltungen:
**GB-A- 1 531 621      US-A- 4 719 135
US-A- 4 871 807      US-A- 5 633 297**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Epoxidharze, insbesondere die üblicherweise kommerziell verwendeten auf Basis von Bisphenol A, sind in nicht modifizierter Form in Wasser unlöslich oder sehr schwer löslich. Dies bedeutet, daß eine mit dem Epoxidharz im Gleichgewicht befindliche wäßrige Phase einen Massenanteil von weniger als 1 % des Epoxidharzes aufweist. Grundsätzlich kann man durch Umsetzung von Epoxidharzen mit Aminen und anschließender Protonierung der basischen Gruppen wasserverdünnbare, kationisch stabilisierte Basisharze erhalten. Ebenso ist es möglich, durch Modifikation des Epoxidharzes mit nichtionischen hydrophilen Gruppen oder mit anionischen Gruppen eine begrenzte Löslichkeit zu erreichen, die ausreicht, um einer Dispersion des betreffenden modifizierten Epoxidharzes in Wasser eine ausreichende Stabilität zu verleihen. Solche Dispersionen sind mit (weiterem) Wasser verdünnbar. Das modifizierte Epoxidharz kann dann aus der wäßrigen Dispersion verarbeitet werden, nach Entfernen des Wasseranteils durch Verdunstung oder Eindringen in das Substrat verbleibt das Harz auf der Oberfläche und bildet bei zweckmäßiger Zusammensetzung der dispersen Phase einen koaleszierten Film, der durch Zusatz von geeigneten Härtern chemisch vernetzt werden kann.

Zur Erzielung der Wasserverdünnbarkeit bei den kationisch modifizierten Epoxidharzen werden die basischen Gruppen des Epoxid-Amin-Adduktes mit Säuren, wie z.B. Ameisensäure, Essigsäure oder Milchsäure teilweise oder vollständig neutralisiert. Dabei ist der Gehalt an basischen Amin-Gruppen im Epoxid-Amin-Addukt (beispielsweise gemessen über die Aminzahl, s. u.) und der Grad von deren Neutralisation (also Anteil an ionischen Gruppen) maßgeblich für das Ausmaß der Wasserverdünnbarkeit.

Bei der Formulierung der Ansätze ist darauf zu achten, daß die Basisharze den erforderlichen Gehalt an Amingruppen aufweisen, um eine ausreichende Stabilität der wäßrigen Lösung des Bindemittels zu gewährleisten. Erfahrungsgemäß sollte eine Aminzahl im Bereich von 30 bis 100 mg/g angestrebt werden.

Für eine praxisgerechte Verdünnbarkeit genügt üblicherweise ein Neutralisationsgrad von 20 bis 60 % der basischen Amin-Gruppen. Die Basisharze werden dann mit deionisiertem Wasser auf die gewünschte Konzentration verdünnt. Man erhält auf diese Art fast klare bis stark opake Harzdispersionen, die eine gut manipulierbare Viskosität im Bereich von etwa 100 bis 4000 mPa·s bei Umgebungstemperatur aufweisen sollten.

Derartige, kationisch stabilisierte Epoxidaddukte zählen zum Stand der Technik und wurden in der Patentliteratur schon vielfach beschrieben. Vor allem auf dem Gebiet der kataphoretischen Elektrotauchlackierung werden sie, in Kombination mit blockierten di- oder oligofunktionellen Isocyanaten erfolgreich eingesetzt (siehe z.B. die österreichischen Patentanmeldungen AT 1665/86, AT 1766/78, DE-A 30 41 700, DE-A 33 00 583, DE-A 33 11 513). Gegebenenfalls werden sie anschließend noch weiter mit Vernetzungskatalysatoren, Pigmenten, Füllstoffen und anderen Zusatzstoffen zu pigmentierten Lacken verarbeitet.

Im Gegensatz zu Elektrotauchlack-Anwendungen, wo die Formulierung der Basisharze und damit die Anzahl und Art der ionogenen Gruppen in starkem Maße die elektrophoretische Applizierbarkeit beeinflußt, gelten z. B. bei der Faßinnenlackierung mittels Spritzauftrag andere Kriterien.

Ein besonderes Problem bei der Kombination von wasserverdünnten Epoxid-Aminaddukten mit nicht blockierten Isocyanaten ist die oft sehr kurze Verarbeitungszeit ("pot life"). Bedingt durch das basische Milieu kommt es in diesem Fall schon vor dem Einbrennen, während der Applikation zur Reaktion der nicht blockierten Isocyanatgruppen mit Wasser. Die Folge davon sind Filmstörungen durch Gasblasen (bei der Reaktion von Isocyanat mit Wasser entstehen die entsprechende Amine und Kohlendioxid) sowie verminderte Filmvernetzung, da ein Teil des Vernetzungsmittels durch die Reaktion mit dem Wasser verbraucht wird.

Die üblicherweise in der kataphoretischen Elektrotauchlackierung eingesetzten Epoxid-Aminaddukte enthalten meist anteilig stark basische, sterisch wenig gehinderte Aminogruppen, da diese besonders günstige elektrochemische Abscheidungseigenschaften ergeben. Zur Kombination mit nicht blockierten Isocyanaten sind solche Addukte aus dem oben genannten Grund wenig geeignet.

Überraschenderweise wurde nun gefunden, daß unter bestimmten Bedingungen wasserverdünnte Epoxid-Addukte mit nicht blockierten Isocyanaten zu 2K-Systemen kombiniert werden können, ohne Probleme mit Filmstörungen durch Gasblasen oder mangelnde Filmvernetzung zu bekommen.

Gegenstand der vorliegenden Erfindung sind daher Zweikomponentensysteme auf Basis von in Wasser dispergierten hydrophilen Epoxid-Addukten **Ah** mit Hydroxylgruppen als reaktiven Gruppen und unblockierten zwei- oder mehrfunktionellen Isocyanaten **B**, wobei die hydrophilen Epoxidaddukte **Ah** ausgewählt sind aus kationisch stabilisierten hydrophilen Epoxid-Addukten **Ak**, anionisch stabilisierten hydrophilen Epoxidaddukten **Aa** sowie nichtionisch stabilisierten Epoxid-Addukten **An**.

Dazu ist es bei den kationisch stabilisierten Epoxid-Amin-Addukten **Ak** einerseits notwendig, daß im Epoxid-Amin-Addukt nur tertiäre, aber keine primären und sekundären Aminogruppen vorhanden sind. Die vorhandenen tertiären Aminogruppen müssen außerdem sterisch gehindert sein. Das erreicht man durch eine gezielte Auswahl der verwendeten Amine und bei der Synthese durch direkte Anknüpfung der Aminogruppen an Epoxidgruppen, ohne daß dabei endständige Amingruppen in aliphatischen Seitenketten entstehen.

Auf Grund dieser Bedingungen sind z. B. Amine wie Diäthylaminopropylamin oder Dimethylaminopropylamin nicht als Rohstoffe geeignet, da daraus hergestellte Epoxid-Amin-Addukte endständige Aminogruppen in aliphatischen Seitenketten enthalten. Als besonders geeignet haben sich hingegen Amine erwiesen, welche entweder kurzkettige, verzweigte Alkylgruppen oder Hydroxyalkylgruppen tragen. Bei der Adduktbildung mit den Oxirangruppen der Epoxid-Komponente entstehen dann sterisch stark gehinderte tertiäre Aminstrukturen, welche jedoch mit Säuren noch gut neutralisierbar sind und damit zur Wasserlöslichkeit der Harze beitragen. Im Falle der Hydroxyalkylgruppen tragenden Amine werden in den Harzverband noch zusätzlich OH-Gruppen eingebaut, die als Vernetzungsstellen z. B. mit Isocyanatgruppen dienen können.

Ein wichtiges Kriterium für die für die Erfindung geeigneten Epoxid-Amin-Addukte **Ak** ist eine genügend hohe Zahl an OH-Gruppen, die mit Isocyanaten vernetzungsfähige Gruppen sind. Bewahrt haben sich OH-Zahlen im Bereich von 150 bis 400 mg/g.

Ein Gegenstand der Erfindung sind daher Zweikomponenten-Bindemittel für die Faßinnenlackierung, bestehend aus einer kationisch stabilisierten Epoxidkomponente Ak und einem Vernetzungsmittel **B**, dadurch gekennzeichnet, daß die Komponente **Ak** ausschließlich solche tertiäre Aminogruppen enthält, die sich bei der Additionsreaktion aus der Aminkomponente **A2** und der Epoxidkomponente **A1** bilden, und daß die Aminkomponente **A2** eine primäre oder sekundäre Aminogruppe und keine tertiären Aminogruppen aufweist.

Als Vernetzungsmittel **B** lassen sich prinzipiell alle Verbindungen einsetzen, die mit Hydroxylgruppen-haltigen Verbindungen unter Addition oder Kondensation reagieren. Im Rahmen der Erfindung haben sich vor allem solche Vernetzungsmittel **B** als geeignet erwiesen, die je Molekül mindestens zwei unblockierte Isocyanatgruppen tragen. Nur mit solchen Isocyanat-Vernetzungsmitteln lassen sich rasch härtende, chemisch resistente Beschichtungen herstellen.

Besonders geeignete Isocyanate sind niedermolekulare, bei Raumtemperatur flüssige Isocyanate mit einer Viskosität von 50 bis 10 000 mPa·s. Dabei können die Isocyanatgruppen aliphatisch, aromatisch oder Gemisch aromatisch-aliphatisch gebunden sein. Insbesondere werden mehrfunktionelle Isocyanate oder deren Gemische mit einer mittleren Isocyanat-Funktionalität von 2 bis 5 eingesetzt. Es ist im Rahmen der Erfindung auch möglich, bei Raumtemperatur feste oder höherviskose Isocyanate einzusetzen, wobei zur Absenkung der Viskosität inerte Lösungsmittel zugesetzt werden. Insbesondere werden aromatenreiche Lösungsmittel wie z. B. "Solventnaphtha" eingesetzt. Ebenfalls geeignet sind die sogenannten Lackisocyanate, die durch Dimerisieren, Trimerisieren oder Oligomerisieren von Diisocyanaten wie 1,6-Diisocyanatohexan, 2,4- und 2,6-Toluylendiisocyanat oder Isophorondiisocyanat zu den bekannten Biureten, Uretdionen, Isocyanuraten oder Allophanaten erhältlich sind.

Die Epoxidkomponente **A1** ist ein handelsübliches Epoxidharz auf Basis von aliphatischen oder aromatischen Polyolen, bevorzugt Diolen, mit einem spezifischen Epoxidgruppen-Gehalt von 300 bis 11 500 mmol/kg . Der spezifische Epoxidgruppengehalt "*SEG*" ist definiert als der Quotient der Stoffmenge an Epoxidgruppen $n$(EP) und der Masse $m_B$ der betreffenden Substanz (und ist damit der Kehrwert des sog. "EV-Wertes" oder "Epoxid-Äquivalentgewichts" (EEW)); übliche Maßeinheit ist "mmol/kg":

$$SEG= n(\text{EP}) / m_B$$

Bevorzugt werden Epoxidharze auf Basis von Bisphenol A und Bisphenol F oder deren Mischungen, mit einem SEG von 500 bis 10 000 mmol/kg. Weiter werden auch Epoxidharze auf Basis von Polypropylenglykol mit einem SEG von 500 bis 5000 mmol/kg bevorzugt eingesetzt.

Bevorzugt ist die Aminkomponente **A2** ausgewählt aus sekundären Monoaminen $R^1R^2NH$, wobei $R^1$ und $R^2$ unabhängig voneinander ausgewählt sind aus der Gruppe der linearen, verzweigten und cyclischen Alkylreste mit 1 bis 20 Kohlenstoffatomen, die gegebenenfalls mindestens eine primäre Hydroxylgruppe tragen, bevorzugt mit 1 bis 4 Kohlenstoffatomen. Weiter kann **A2** ausgewählt sein aus der Gruppe der primären Monoamine $R^3NH_2$, wobei $R^3$ ausgewählt ist aus linearen, verzweigten und cyclischen Alkylgruppen mit 2 bis 20, bevorzugt 3 bis 12 Kohlenstoffatomen, mit der Maßgabe, daß $R^3$ mindestens eine primäre Hydroxylgruppe trägt, die in $\alpha$- oder $\beta$- Stellung zur primären Aminogruppe steht. Geeignete Amine sind z. B. Diisopropanolamin, Diäthanolamin, Diisopropylamin, Di-isobutylamin, N-Methylcyclohexylamin, Monoisopropanolamin und Monoäthanolamin.

Die Komponente **Ak** ist erhältlich durch Umsetzung von einem Epoxidharz **A1** mit jeweils mindestens zwei Epoxidgruppen pro Molekül und Aminen **A2**. Diese Umsetzung wird derart vorgenommen, daß zunächst das Epoxidharz oder eine Mischung mehrerer Epoxidharze vorgelegt wird und auf eine Reaktionstemperatur von 80 bis 160 °C, bevorzugt 100 bis 140 °C erwärmt wird. Durch Zusatz von vorzugsweise aromatischen Polyolen wie Bisphenol A oder Bisphenol F und mit geeigneten Katalysatoren kann dabei der spezifische Epoxidgruppen-Gehalt auch im Sinne einer Advancement-Reaktion verringert werden. Bevorzugt werden inerte Lösungsmittel zugesetzt, um die Viskosität herabzusetzen. Nach Abkühlen auf 60 bis 100 °C wird die Aminkomponente hinzugefügt. Die Reaktion ist beendet, wenn der Gehalt an Epoxidgruppen geringer als 50 mmol/kg ist ("EEW" größer als 20 000 g/mol). Danach wird das Lösungsmittel abdestilliert, das Epoxid-Amin-Addukt wird mit einer wäßrigen Säure, bevorzugt einer organischen Säure wie Ameisensäure, Milchsäure oder Citronensäure, zumindest teilweise neutralisiert und durch Zusatz von Wasser, bevorzugt in mehreren Teilmengen, unter guter Durchmischung dispergiert.

Die Aminzahl ist gemäß DIN 53 176 definiert als der Quotient derjenigen Masse $m_{KOH}$ an Kaliumhydroxid, die genausoviel Säure zur Neutralisation verbraucht wie eine zu untersuchende Probe, und der Masse $m_B$ dieser Probe (Masse des Feststoffes in der Probe bei Lösungen oder Dispersionen); ihre übliche Einheit ist "mg/g".

Die Hydroxylzahl ist gemäß DIN 53 240 definiert als der Quotient derjenigen Masse $m_{KOH}$ an Kaliumhydroxid, die genausoviel Hydroxylgruppen aufweist wie eine zu untersuchende Probe, und der Masse $m_B$ dieser Probe (Masse des Feststoffes in der Probe bei Lösungen oder Dispersionen); ihre übliche Einheit ist "mg/g".

Um die geforderten Filmeigenschaften wie Vernetzungsdichte, Substrathaftung und Flexibilität zu erzielen, hat sich eine Hydroxylzahl von 150 mg/g bis 400 mg/g bewährt.

Ein weiterer Gegenstand der vorliegenden Erfindung ist ein Zweikomponentensystem enthaltend ein anionisch stabilisiertes wasserverdünnbares Epoxidharz **Aa** sowie einen isocyanat-funktionellen Vernetzer **B**.

Eine Möglichkeit, Epoxidharze mit Hilfe von anionischen oder anionogenen Gruppen wasserverdünnbar zu machen, ist die Modifizierung des Epoxidharzes mit sauren Gruppen, insbesondere mit Phosphorsäure- oder Phosphonsäure-Gruppen. Zu diesem Zweck können die Epoxidharze **A1** mit mehrbasigen Säuren **A3** ausgewählt aus Phosphorsäure, Alkylphosphonsäuren $R^4 PO_3H_2$ mit 1 bis 18, bevorzugt 1 bis 4 Kohlenstoffatomen in der Alkylgruppe $R^4$, Arylphosphonsäuren und Hydroxyalkylphosphonsäuren mit bevorzugt 1 bis 4 Kohlenstoffatomen in der Alkylgruppe, sowie den entsprechenden Phosphonigsäuren $R^4 PO_2H_2$ in Lösung (z. B. Ketone, Monoalkohole oder Mischungen aus Ketonen und Alkoholen als Lösungsmittel), umgesetzt werden; dabei bilden sich durch Öffnung des Oxiranringes saure β-Hydroxyester **Aa**. Pro 1 mol Oxirangruppen werden 1,0 mol **A3**, bevorzugt bis zu 0,5 mol **A3**, eingesetzt. Die Säurezahl dieses Epoxid-Säure-Addukts **Aa** liegt vorzugsweise zwischen 15 und 200 mg/g, besonders bevorzugt zwischen 20 und 150, und insbesondere zwischen 25 und 100 mg/g. Das Addukt wird zur Verbesserung der Wasserlöslichkeit bzw. Wasserverdünnbarkeit zumindest teilweise neutralisiert, wobei der Neutralisationgrad bevorzugterweise zwischen 10 und 100 %, besonders bevorzugt zwischen 20 und 70 % liegt.

Die Säurezahl ist gemäß DIN 53 402 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g".

Statt der Epoxide **A1** selbst lassen sich hier auch modifizierte Epoxide **A16** einsetzen, die durch Reaktion der Epoxide **A1** mit Monocarbonsäuren **A6** zugänglich sind, die ausgewählt sind aus gesättigten und ungesättigten aliphatischen Carbonsäuren mit 2 bis 40 Kohlenstoffatomen, bevorzugt 8 bis 18 Kohlenstoffatomen und aromatischen Monocarbonsäuren, deren aromatischer Ring mit Alkyl-, Alkoxy-, Hydroxyl- oder Halogengruppen substituiert sein kann. Dabei sind die Mengen der Reaktanden so zu bemessen, daß die Stoffmenge der Carboxylgruppen in **A6** kleiner oder gleich 40 % der Stoffmenge der Epoxidgruppen in **A1** ist, bevorzugt kleiner oder gleich 20 % dieser Stoffmenge. Das bedeutet daß mindestens 60 % bzw. mindestens 80 % der Oxirangruppen in dieser Reaktion nicht umgesetzt werden.

Anionisch modifizierte Epoxidharze, die für die Erfindung einsetzbar sind, lassen sich auch durch Umsetzung von Mischungen aus modifizierten Epoxidharzen gemäß **A16** und Epoxidharzen **A1** mit den mehrbasigen Säuren gemäß **A3** in Lösung gewinnen.

Eine weitere Bindemittel-Klasse, die mit nicht blockierten Isocyanaten zu Zweikomponenten-Systemen kombiniert werden kann, sind Epoxidharze **Aak** mit zwitterionischem Charakter. Dazu werden zunächst Additionsprodukte **A12** aus trocknenden Ölen **A121**, ungesättigten Fettsäuren **A122** oder Mischungen dieser beiden Komponenten **A121** und **A122** mit Maleinsäureanhydrid **A123** hergestellt. Es ist auch möglich, Addukte der trocknenden Öle **A121** und der Fettsäuren **A122** mit Maleinsäureanhydrid **A123** jeweils für sich herzustellen und anschließend zu mischen. Die Anhydridgruppen dieser Addukte werden durch Reaktion mit Wasser oder Monoalkoholen zu je zwei Carbonsäuregruppen oder je einer Carbonsäuregruppe und einer Estergruppe hydrolysiert. Hydroxylgruppen enthaltende Epoxid-Amin-Addukte **A18**, die durch Umsetzung von Epoxidharzen **A1** mit sekundären Aminen **A8** erhältlich sind, werden anschließend mit diesen hydrolysierten Addukten **A12h** kondensiert. Der Massenanteil der von dem hydrolysierten Addukt **A12h** herrührenden Bausteine in dem Kondensat beträgt bis zu 40 %, bevorzugt zwischen 10 und 35 %. Die Säurezahl des Kondensats **Aak** ist 10 bis 100 mg/g, bevorzugt 15 bis 95 mg/g, und insbesondere 20 bis 90 mg/g. Nach dem Kondensationsschritt liegen zwitterionische Verbindungen **Aak** vor, die unter Bildung von Anionen durch Neutralisation mit Aminen oder wäßrigem Ammoniak oder von Kationen durch Neutralisation mit Säuren in Wasser löslich bzw. dispergierbar sind.

Zur Darstellung der beschriebenen Epoxid-Amin-Addukte **A18** lassen sich statt der Epoxide **A1** auch solche oben als **A16** beschriebenen Epoxidharze einsetzen, die zuvor durch Reaktion der Epoxide **A1** mit den oben beschriebenen Monocarbonsäuren **A6** zugänglich sind. Dabei sind die Mengen der Reaktanden so zu bemessen, daß die Stoffmenge der Carboxylgruppen in **A6** kleiner oder gleich 40 % der Stoffmenge der Epoxidgruppen in **A1** ist, bevorzugt kleiner oder gleich 20 % dieser Stoffmenge. Das bedeutet, daß mindestens 60 % (bzw. mindestens 80 %) der Oxirangruppen in dieser Reaktion nicht umgesetzt werden. Es ist auch möglich, modifizierte Epoxidharze **A17** einzusetzen, die durch Umsetzen von Epoxidharzen **A1** mit Polyhydroxyverbindungen **A7** zugänglich sind, insbesondere mit aliphatischen Dihydroxyverbindungen ausgewählt aus $\alpha,\omega$-Diolen mit 2 bis 8 Kohlenstoffatomen und Polyoxyalkylenglykolen mit 2 bis 4 Kohlenstoffatomen im Alkylenrest unter Katalyse insbesondere mit Lewis-Säuren oder Addukten von Lewis-Säuren mit Lewis-Basen, wie z. B. Bortrifluorid, Bortrifluorid-Ätheraten, Tetrafluoroborsäure, Antimonpentafluorid, Hexafluoroantimonsäure etc. Auch hierfür gilt, daß die Mengen der Reaktanden **A1** und **A7** so zu wählen sind, daß die Stoffmenge der Hydroxylgruppen in **A7** kleiner oder gleich 40 % der Stoffmenge der Epoxidgruppen in **A1** ist, bevorzugt kleiner oder gleich 20 % dieser Stoffmenge.

Geeignete Amine **A8** sind insbesondere sekundäre aliphatische Amine mit linearen, verzweigten oder cyclischen Alkylresten mit vorzugsweise 2 bis 12 Kohlenstoffatomen, die gegebenenfalls auch Hydroxylgruppen tragen. Besonders geeignet sind beispielsweise Diäthanolamin und Diisopropanolamin.

Geeignete trocknende Öle **A121** sind beispielsweise Lein-, Holz-, Hanf-, Mohn-, Walnuß-, Perilla-, Oiticica-, Saflor- und Fischöle sowie dehydratisierte Rizinusöle, besonders bevorzugt werden Rizinusöle, Saflor- und Leinöl. Es ist besonders bevorzugt, Gemische von trocknenden Ölen durch gemeinsames Erhitzen, gegebenenfalls in Gegenwart von Katalysatoren, umzuestern und anschließend mit Maleinsäureanhydrid als Komponente **A123** umzusetzen. Das gebildete Addukt wird anschließend durch Zugabe einer ausreichenden Menge an Wasser oder eines Mono-Alkohols unter Freisetzung von Carboxylgruppen und gegebenenfalls Bildung einer Estergruppe hydrolysiert. Geeignete ungesättigte Fettsäuren **A122** haben 6 bis 30 Kohlenstoffatome und mindestens eine olefinische Doppelbindung; Beispiele sind Palmitoleinsäure, Ölsäure, Erucasäure, Linolund Linolensäure, Elaeostearinsäure und Arachidonsäure sowie deren handelsübliche Mischungen.

Im Rahmen der Erfindung ist es auch möglich, Epoxidharze dadurch anionisch zu modifizieren, daß man zunächst Hydroxy-, Mercapto- oder Aminosäuren **A4** mit mindestens einer gegenüber Isocyanat reaktiven Gruppe ausgewählt aus Hydroxy-, Aminound Mercaptogruppen und mindestens einer Säuregruppe, bevorzugt ausgewählt aus Carboxyl-, Sulfonsäure- oder Phosphonsäure-Gruppe mit einem mindestens difunktionellen Isocyanat **A5** umsetzt, wobei ein Zwischenprodukt **A45** mit mindestens einer Säuregruppe und mindestens einer Isocyanatgruppe entsteht. Die für diese Ausführungsform bevorzugt eingesetzten Säuren weisen solche Säuregruppen auf, die infolge einer sterischen Hinderung selbst nicht oder nur sehr langsam mit Isocyanat unter Bildung eines Amids und Freisetzung von Kohlendioxid reagieren. Das Zwischenprodukt **A45** wird anschließend mit einem Hydroxylgruppen-haltigen Epoxidharz **A14** umgesetzt, wobei die Mengenverhältnisse so gewählt werden, daß die Isocyanatgruppen vollständig verbraucht werden.

Die Hydroxylgruppen-haltigen Epoxidharze **A14** sind bekannt und lassen sich beispielsweise durch Umsetzen von Diglycidyläthern von Diolen mit organischen Verbindungen mit mindestens einer gegenüber Oxirangruppen reaktiven Hydroxylgruppe darstellen. Die Isocyanate **A5** sind ebenfalls bekannt und sind ausgewählt aus aliphatischen, aromatischen und gemischt aromatisch-aliphatischen Isocyanaten mit mindestens zwei Isocyanatgruppen. geeignet sind beispielsweise 2,4- und 2,6-Toluylendiisocyanat, 1,6-Diisocyanatohexan, Isophorondiisocyanat und Tetramethylxylylendiisocyanat. Die Säuren **A4** sind beispielsweise aliphatische Hydroxycarbonsäuren wie Milchsäure, Citronensäure, Weinsäure und Dimethylolpropionsäure, Aminosäuren wie Taurin, Lysin und Asparaginsäure, oder Phosphonsäuren wie Hydroxymethanphosphonsäure.

Ein weiterer Gegenstand der vorliegenden Erfindung ist ein Zweikomponentensystem enthaltend ein nichtionisch stabilisiertes wasserverdünnbares Epoxidharz **An** und einen isocyanatfunktionellen Vernetzer **B**. Nichtionisch modifizierte hydrophile Epoxidharze **An** leiten sich insbesondere von Epoxidharzen ab, die Segmente von Oxyalkylengruppen (bevorzugt Oxyäthylengruppen oder Mischungen davon mit Oxypropylengruppen) enthalten. Bei diesen modifizierten Harzen ist naturgemäß keine Neutralisation zur Verbesserung der Wasserverdünnbarkeit erforderlich. Besonders bevorzugt sind solche Oxyalkylen-Segmente, die einen Massenanteil von mindestens 20 %, bevorzugt 40 bis 100 %, und besonders bevorzugt 50 bis 90 % an Oxyäthylengruppen enthalten.

Die Bindemittel gemäß der vorliegenden Erfindung sind insbesondere geeignet für die Innenlackierung von Gebinden, die mit aggressiven Chemikalien in Berührung kommen.

| Verwendete Abkürzungen: | | |
|---|---|---|
| Abk. | Bedeutung | Maßeinheit |
| EEW | "Epoxidäquivalentgewicht", "EV-Wert" | g/mol |
| SEG | spezifischer Epoxidgruppen-Gehalt | mmol/kg |
| OHZ | Hydroxylzahl | mg/g |
| AZ | Aminzahl | mg/g |
| n.f.A. | nicht flüchtige Anteile (Festkörper-Massenanteil der Harzlösung oder -dispersion) | g/(100 g) |

(fortgesetzt)

| Verwendete Abkürzungen: | | |
|---|---|---|
| Abk. | Bedeutung | Maßeinheit |
| $M_w$ | gewichtsmittlere molare Masse | g/mol |
| EP 1 | Diepoxidharz auf Basis von Bisphenol A (SEG = 5405 mmol/kg; EEW ca. 185 g/mol) | |
| EP 2 | Diepoxidharz auf Basis von Bisphenol A (SEG = 1080 mmol/kg; EEW ca. 925 g/mol) | |
| EP 3 | Diepoxidharz auf Basis von Polypropylenglykol (SEC = 2940 mmol/kg; EEW ca. 340 g/mol) | |
| EP 4 | Diepoxidharz auf Basis von Bisphenol A (SEG = 2 000 mmol/kg; EEW ca. 500 g/mol) | |

In den nachfolgenden Beispielen bedeuten ebenso wie im vorhergehenden Text alle Angaben mit der Einheit "%" Massenanteile mit der Einheit "g/(100 g)", soweit nicht anders angegeben. "Teile" (abgekürzt "Tle.") sind stets Massenteile. Konzentrationsangaben in "%" sind Massenanteile des gelösten Stoffes in der Lösung.

Die früher so bezeichnete "Grenzviskositätszahl", nach DIN 1342, Teil 2.4, "Staudinger-Index" $J_g$ genannt, ist der Grenzwert der Staudinger-Funktion $J_v$ bei abnehmender Konzentration und Schubspannung, wobei $J_v$ die auf die Massenkonzentration $\beta_B = m_B / V$ des gelösten Stoffes B (mit der Masse $m_B$ des Stoffes im Volumen $V$ der Lösung) bezogene relative Viskositätsänderung $\eta_r - 1 = (\eta - \eta_s)/\eta_s$ ist, also $J_v = (\eta_r - 1) / \beta_B$. Dabei bedeutet $\eta$ die Viskosität der untersuchten Lösung und $\eta_s$ die Viskosität des reinen Lösungsmittels. (Die physikalische Bedeutung ist die eines spezifischen hydrodynamischen Volumens des solvatisierten Polymerknäuels bei unendlicher Verdünnung und im Ruhezustand.) Die üblicherweise für $J$ verwendete Einheit ist "cm$^3$/g"; früher häufig "dl/g".

Beispiele für kationisch stabilisierte Epoxid-Amin-Addukte

Beispiel K1

In einem geeigneten Reaktionsgefäß, ausgestattet mit Rührer, Thermometer, Zugabegefäß und Destillationsvorrichtung, wurden 1850 g EP 2 (2,0 mol Epoxid-Gruppen) vorgelegt und zunächst ohne Rühren zum Schmelzen gebracht (Schmelzpunkt etwa 80 °C). Unter Rühren wurde auf 120 °C erhitzt und portionsweise mit insgesamt 460 g Methoxypropanol verdünnt. Anschließend wurde auf 70 °C abgekühlt und rasch 210 g (2,0 mol) Diäthanolamin zugegeben. Nach Abklingen der Exothermie wurde der Ansatz bei 90 °C gehalten bis zu einem SEG von unter 50 mmol/kg (EEW von > 20 000 g/mol). Nach Abdestillieren des Lösungsmittels wurde das Harz durch Zugabe von 379 g 10 %iger Ameisensäure (Stoffmenge der Ameisensäure, bezogen auf den nichtflüchtigen Anteil des Harzes: 40 mmol /100 g) teilneutralisiert und nach einer Homogenisierungszeit von 1 Stunde portionsweise mit Wasser auf einen Festkörper-Massenanteil von 35 % verdünnt.

| AZ | 54 mg/g |
|---|---|
| OHZ | 326 mg/g |

Beispiel K2

In einem geeigneten Reaktionsgefäß, ausgestattet mit Rührer, Thermometer, Zugabegefäß und Destillationsvorrichtung wurde eine Mischung aus 274 g (1,2 mol) Bisphenol A, 481 g (entsprechend 2,6 mol Epoxidgruppen) EP 1 und 136 g (entsprechend 0,4 mol Epoxid-Gruppen) EP 3 vorgelegt und unter Rühren auf 120 °C erwärmt. Nach Zugabe von 0,3 g Triphenylphosphin wurde auf 160 °C aufgeheizt unter Ausnutzung der auftretenden leichten Exothermie. Bei dieser Temperatur wurde gehalten, bis ein SEG von ca. 770 mmol/kg (EEW von 1300 g/mol) erreicht war. Anschließend wurde auf 120 °C abgekühlt und mit 200 g Methoxypropanol verdünnt. Nach Abkühlen bis auf 70 °C wurde rasch 63 g (0,6 mol) Diäthanolamin zugegeben und die Temperatur unter Ausnutzung der Exothermie auf 90 °C gesteigert. Bei dieser Temperatur wurde bis zu einem SEG von unter 50 mmol/kg (EEW von > 20 000 g/mol) gehalten. Nach Abdestillieren des Lösungsmittels wurde das Harz durch Zugabe von 229 g 10 %iger Essigsäure (Stoffmenge der Essigsäure, bezogen auf den nichtflüchtigen Anteil des Harzes: 40 mmol /100 g) teilneutralisiert und nach einer Homogenisierungszeit von 1 Stunde portionsweise mit Wasser auf einen Festkörper-Massenanteil (n.f.A.) von 38 % verdünnt.

| AZ | 35 mg/g |
|---|---|
| OHZ | 246 mg/g |

### Beispiel K3

Eingesetzt wurden 1850 g (2,0 mol Epoxidgruppen) EP 2; 202 g (2,0 mol) Diisopropylamin; 400 g Methoxypropanol;

Durchführung wie im Beispiel 1 beschrieben. Teilneutralisation mit 40 mmol Milchsäure auf 100 g des Feststoffes im Harz.

| n.f.A. | 40 % |
|---|---|
| AZ | 54 mg/g |
| OHZ | 218 mg/g |

### Beispiel K4

Eingesetzt wurden 1850 g (2,0 mol Epoxidgruppen) EP 2; 133 g (1,0 mol) Diisopropanolamin; 105 g (1,0 mol) Diäthanolamin; 400 g Methoxypropanol;

Durchführung wie im Beispiel 1 beschrieben. Teilneutralisation mit 10 %iger Ameisensäure (Stoffmenge an Ameisensäure, bezogen auf den nichtflüchtigen Anteil des Harzes: 50 mmol/100 g)

| n.f.A. | 37 % |
|---|---|
| AZ | 54 mg/g |
| OHZ | 322 mg/g |

### Beispiel K 5

Eingesetzt wurden 274 g (1,2 mol) Bisphenol A; 296 g (1,6 mol Epoxidgruppen) EP 1; 272 g (0,8 mol Epoxidgruppen) EP 3; 0,3 g Triphenylphosphin; 37 g (0,6 mol) Monoäthanolamin; 200 g Methoxypropanol

Durchführung wie in Beispiel 2 beschrieben. Teilneutralisation mit 50 mmol Ameisensäure je 100 g des nichtflüchtigen Anteils im Harz.

| n.f.A. | 40 % |
|---|---|
| AZ | 38 mg/g |
| OHZ | 191 mg/g |

### Beispiel K 6

Eingesetzt wurden 228 g (1,0 mol) Bisphenol A; 76 g (1,0 mol) Propylenglykol; 1110 g (6,0 mol Epoxidgruppen) EP 1; 0,5 g Triphenylphosphin; 101 g (1,0 mol) Diisopropylamin; 133 g (1,0 mol) Diisopropanolamin; 250 g Methoxypropanol

Durchführung wie in Beispiel 2 beschrieben. Teilneutralisation mit 40 mmol Ameisensäure je 100 g des nichtflüchtigen Anteils im Harz.

| n.f.A. | 38 % |
|---|---|
| AZ | 68 mg/g |
| OHZ | 272 mg/g |

### Beispiel K 7

Eingesetzt wurden 2000 g (4,0 mol Epoxidgruppen) EP 4; 75 g (1,0 mol) Monoisopropanolamin; 210 g (2,0 mol) Diäthanolamin; 550 g Methoxypropanol

Durchführung wie in Beispiel 1 beschrieben. Teilneutralisation mit 50 mmol Ameisensäure je 100 g des nichtflüchtigen Anteils im Harz.

| n.f.A. | 36 % |
|--------|------|
| AZ | 73 mg/g |
| OHZ | 318 mg/g |

Anionisch stabilisierte Epoxidaddukte als Basisharze für 2K-Isocyanat Systeme

Beispiel A1

Komponente (A):

In einem geeigneten Reaktionsgefäß wurde eine Mischung aus 165 Tlen dehydratisiertem Rizinusöl und 135 Tlen Leinöl 1 Stunde bei 250 °C umgeestert. Nach Abkühlen auf 170 °C wurden 100 Tle Maleinsäureanhydrid zugegeben und bei 210 °C so lange reagiert, bis kein freies Maleinsäureanhydrid mehr nachweisbar war. Das Addukt wurde auf 90 °C gekühlt und nach Zusatz einer Mischung aus 30 Tlen Wasser und 3 Tlen Triäthylamin hydrolysiert, bis eine Säurezahl von ca. 200 mg/g erreicht war. Der Ansatz wurde dann mit Methoxypropanol auf einen Festkörper-Massenanteil von 90 % verdünnt.

Komponente (B):

475 Tle eines Bisphenol A-Epoxidharzes (**SEG** = 2100 mmol/kg; EEW ca. 475 g/mol) wurden in 100 Tlen Diäthylenglykoldimethyläther (DGM) gelöst. Bei 80 °C wurde eine Mischung aus 105 Tlen Diäthanolamin und 45 Tlen DGM zugegeben und bis zur praktisch vollständigen Umsetzung reagiert. Dann wurde der Ansatz mit Methyläthylketon auf einen Festkörper-Massenanteil von 65 % eingestellt und durch portionsweise Zugabe von ca. 15 Tlen Toluylendiisocyanat der Staudinger-Index $J_g$ ("Grenzviskositätszahl", gemessen in Dimethylformamid bei 20 °C) bis auf 10 cm$^3$/g gesteigert. Anschließend wurde das Lösungsmittel unter vermindertem Druck vollständig abgezogen.

Erfindungsgemäße Kombination:

22 Tle der Komponente (A) und 80 Tle der Komponente (B) wurden gemischt und mit Methoxypropoxypropanol auf einen Festkörper-Massenanteil von 85 % eingestellt. Die partielle Kondensation erfolgte bei 100 °C, bis ein Staudinger-Index $J_g$ (gemessen in Dimethylformamid bei 20 °C) von 16 cm$^3$/g erreicht war. Die Säurezahl des Kondensates lag zwischen 25 und 35 mg/g. Nach Abkühlen wurde der Ansatz mit 6 Tlen Dimethyläthanolamin neutralisiert und mit deionisiertem Wasser auf einen Festkörper-Massenanteil von 35 % verdünnt.

Beispiel A2

190 g eines Diepoxidharzes auf Bisphenol A-Basis (**SEG** = 5155 bis 5495 mmol/kg; Epoxidäquivalentgewicht 182 bis 194 g/mol) wurden bei 160 °C mit 84 g (0,3 mol) Leinölfettsäure bis zu einer Säurezahl unter 3 mg/g verestert und mit 29,5 g Diacetonalkohol auf einen Festkörper-Massenanteil von 90 % verdünnt. Zu einer Lösung aus 60 g einer 75 %igen wäßrigen Lösung von ortho-Phosphorsäure (0,46 mol) und 130 g Diacetonalkohol wurde bei 50 °C eine Mischung aus 304 g des oben hergestellten Epoxidesters und 267,2 g einer Lösung von 213,75 g eines Diepoxidharzes auf Bisphenol A-Basis (0,45 mol Oxirangruppen; Schmelzpunkt nach Durran 64 bis 74 °C; spezifischer Hydroxylgruppen-Gehalt 0,32 mol/100 g) in Diacetonalkohol portionsweise zugegeben und bis zu einem Oxirangehalt von Null reagiert. Das Produkt hatte eine Säurezahl von 92,3 mg/g und war nach Neutralisation mit Triäthylamin in Wasser fast klar löslich. Der Festkörper-Massenanteil des Bindemittels wurde mit Diacetonalkohol auf 70 % eingestellt.

Beispiel A3

12,8 g (0,115 mol) Hydroxymethanphosphonsäure, 4,5 g deionisiertes Wasser und 64,7 g Methyläthylketon wurden auf 70 °C erwärmt. Unter Rühren wurde eine Lösung aus 256 g Diacetonalkohol und 475 g (1 mol Oxirangruppen) eines Diepoxidharzes auf Bisphenol A-Basis (Schmelzpunkt nach Durran 64 bis 74 °C, spezifischer Hydroxylgruppen-Gehalt 0,32 mol/100 g) portionsweise zugesetzt. Die Temperatur wurde gehalten, bis der Oxirangehalt auf Null gesunken war. Das Reaktionsprodukt hatte eine Säurezahl von 14 mg/g und ergab nach Neutralisation mit Triäthylamin in Wasser eine leicht opake Lösung. Der Festkörper-Massenanteil des Bindemittels wurde mit Diacetonalkohol auf 70 % eingestellt.

Beispiel A4

39 g (0,3 mol) einer 75 %igen wäßrigen Lösung von ortho-Phosphorsäure und 116 g Diacetonalkohol wurden auf 65 °C erwärmt. Unter Rühren wurde eine Lösung aus 210 g Diacetonalkohol und 475 g (1 mol Oxirangruppen) eines Diepoxidharzes auf Bisphenol A-Basis (Schmelzpunkt nach Durran 64 bis 74 °C, spezifischer Hydroxylgruppen-Gehalt 0,32 mol/100 g) portionsweise zugegeben. Die Temperatur wurde gehalten, bis der Oxirangehalt auf Null gesunken war. Das Produkt hatte eine Säurezahl von 69,4 mg/g. Nach Neutralisation mit 36 g Dimethyläthanolamin wurden 177 g Diacetonalkohol bei ca. 95 °C unter vermindertem Druck abgezogen. Anschließend wurde mit deionisiertem Wasser auf einen Festkörper-Massenanteil von 25 % verdünnt.

Beispiel A5

Epoxidgruppen-freie EP-Dispersion, anionisch stabilisiert

446 g einer 30%igen Lösung von Dimethylolpropionsäure in N-Methylpyrrolidon (1 mol Carboxylgruppen wurden in 348 g einer technischen Mischung von 2,4- und 2,6-Toluylendiisocyanat (2 mol) zugetropft, ohne 30 °C zu überschreiten. Es wurde bei 30 °C gehalten, bis der theoretische NCO-Gehalt von ca. 10,5 % erreicht war. Danach wurden 30 g (0,5 mol) Isopropanol zugetropft und bei 60 °C gehalten, bis ein NCO-Gehalt von 7,6 % erreicht war. Hierauf wurde diese Vorstufe zu einer Anlösung von 1360 g eines mit Phenol bis zur vollständigen Abreaktion der Epoxidgruppen umgesetzten Epoxidharzes aus Bisphenol A-Diglycidyläther und Bisphenol A (®Beckopox EM 460 der Vianova Resins GmbH) in 600 g Xylol bei 80°C zugesetzt und so lange bei 90 bis 100 °C gehalten, bis keine freien Isocyanatgruppen mehr nachweisbar waren. Danach wurde mit einer wäßrigen Lösung von Lithiumhydroxid neutralisiert und mit voll entsalztem Wasser verdünnt. Das als Hilfslösungsmittel verwendete Xylol wurde im Azeotrop-Verfahren aus der wäßrigen Lösung vollständig abdestilliert. Es ergab sich eine Dispersion mit folgenden Kennzahlen:

| | |
|---|---|
| Neutralisationsgrad | 60 % |
| n.f.A. (5 min 125°C, Folienmethode) | 40% |
| Viskosität (ISO 3219) | 2500 mPa·s |
| Massenanteil der Dispersion an N-Methylpyrrolidon | 6,7% |

Beispiel N1

Herstellung eines Emulgators:

309 g technisches Polyäthylenglykol mit einer gewichtsmittleren molaren Masse $M_w$ von 4000 g/mol und 34,1 g eines Polyglycidyläthers auf Basis von Bisphenol A mit einem spezifischen Epoxidgruppen-Gehalt SEG von ca. 5465 mmol/kg ("Epoxidäquivalentgewicht" von 183 g/mol) wurden zusammen auf 100 °C erhitzt und unter Rühren mit 0,35 ml 50%iger wäßriger Tetrafluorborsäure versetzt. Das Verhältnis der Anzahl von OH-Gruppen zur Anzahl Epoxidgruppen betrug 1: 1,20. Die Mischung wurde weiter auf 130 °C erwärmt und bei dieser Temperatur gehalten, bis der SEG des Kondensationsproduktes ca. 2,9 mmol/kg (Epoxidäquivalentgewicht ca. 350000 g/mol) betrug. Nach Erkalten wies der so hergestellte Emulgator eine spröde, wachsartige feste Konsistenz auf.

360 g Bisphenol A-Diglycidyläther (SEG ca. 5560 mmol/kg, EEW ca. 180 g/mol) wurde auf ca. 110 °C erwärmt, 108,3 g Bisphenol A und 70 g des oben beschriebenen Emulgators wurden hinzugefügt. Die Temperatur wurde auf ca. 125 °C gesteigert, 0,9 g Triphenylphosphin wurden zugesetzt, worauf eine exotherme Reaktion einsetzte. Nach Abklingen der Exothermie wurde so lange bei 160°C gehalten, bis die Mischung einen SEG von ca. 1949 bis 1960 mmol/kg aufwies (EEW von 510 bis 515 g/mol). Danach wurde abgekühlt und ab 100°C voll entsalztes Wasser bis zur Phaseninversion zugesetzt. Anschließend wurde 1 Stunde unter guter Rührleistung geschert und hierauf weiter mit Wasser verdünnt.

Es resultierte eine lagerstabile Dispersion mit folgenden Kennzahlen:

| | |
|---|---|
| n.f.A. (5 min 120°C; Folienmethode) | 53% |
| SEG (Dispersion in der genannten Konzentration) | 1000 mmol/kg |
| Viskosität der Dispersion (ISO 3219) | 12.000 mPa·s |

Lacktechnische Ausprüfung ausgewählter Patentbeispiele:

Die Zahlenangaben in der Rezeptur sind Massenanteile. Abkürzung für Sekunden ist "s", für Minuten "min" und für Stunden "h". Die Einbrennbedingungen beziehen sich auf Objekttemperatur.

| Kationisch stabilisierte Epoxidaddukte : | | | |
|---|---|---|---|
| Epoxid-Dispersion gemäß Beispiel | K2 | K2 | K2 |
| Polyisocyanat | Bayhydur VP LS 2150/1 | Bayhydur VP LS 2219 | Bayhydur B 3100 |
| Verhältnis der Stoffmengen der reaktiven Gruppen $n$(OH) : $n$( NCO) | 1 : 1,25 | 1 : 1,25 | 1:1,25 |
| **Rezeptur** | **Lack KI** | **Lack KII** | **Lack KIII** |
| Bindemittel | 50,0 | 50,0 | 50,0 |
| Polyisocyanat | 39,9* | 21,7* | 21,8* |
| Methoxypropylacetat (MPAC) | 16,0* | 21,7* | 21,8* |
| voll entsalztes Wasser | 8,0 | 8,0 | |
| Summe | 113,9 | 101,4 | 93,6 |
| berechneter Festkörper-Massenanteil | 36,8% | 37,2% | 40,4% |
| Topfzeit ("pot life") | ca. 3 h | ca. 30 min | ca. 30 min |
| Herstellung | *Mischung aus MPAC+ Polyisocyanat langsam unter Rühren zugeben, 5 min einrühren. | *Mischung aus MPAC+ Poly-isocyanat langsam unter Rühren zugeben, 5 min einrühren. | *Mischung aus MPAC+ Poly-isocyanat langsam unter Rühren zugeben, 5 min einrühren. |
| **Aufzug auf Glasplatte** | | | |
| **Schichtstärke naß** | **100 μm** | **100 μm** | **100 μm** |
| **Trockenschichtstärke** | **12 μm** | **12 μm** | **15 μm** |
| **Einbrennbedingung (t bei jeweils 80 °C; 150 °C; 200 °C)** | **30 min; 15 min; 15 min** | **30 min; 15 min; 15 min** | **30 min; 15 min; 15 min** |
| **Pendelhärte nach König DIN 53157 in s** | **177 ; 190 ; 202** | **65 ; 200 ; 205** | **65 ; 175 ; 192** |
| **Acetontest (Filmerweichung nach Einwirkzeit)** | **5 s ; 15 s ; >2 min** | **5 s ; 2 min ; >5 min** | **5 s ; 45 s ; >2 min** |

* Das Polyisocyanat wird vor dem Zumischen mit Methoxypropylacetat (MPAC) verdünnt.
® Bayhydur : hydrophilisierte Polyisocyanate der Bayer AG, B. VP LS 2150 : auf Basis von Isophoron-Diisocyanat-Trimer; B. VP LS 2219 und B 3100 : auf Basis von 1,6-Diisocyanatohexan-Trimer jeweils 70 % Massenanteil in einer Mischung aus Methoxypropylacetat/Xylol.

Bei kationisch stabilisierten Bindemitteln über im Harzverbund eingebaute Amine zeigt sich sehr deutlich die Abhängigkeit des pot life von der Struktur und Basizität der verwendeten Amine. Generell läßt sich feststellen, daß primäre und sekundäre Aminogruppen im Harz zu einem zu kurzen pot life führen und eine Applikation nur über 2K-Spritzpistolen möglich ist. Hydrophilisierte Isocyanate auf Basis IPDI zeigen ein längeres pot life als hydrophilisierte Isocyanate auf 4,4'-Diisocyanatodicyclohexylmethan-Basis.

| Anionisch stabilisierte Epoxidaddukte: | | |
|---|---|---|
| Epoxid-Dispersion gemäß Beispiel | A4 | A4 |
| Polyisocyanat | Bayhydur B 3100 | Bayhydur VP LS 2219 |
| Verhältnis der Stoffmengen der reaktiven Gruppen $n$(OH) : $n$(NCO) | 1:1,25 | 1:1,25 |
| Rezeptur | Lack AI | Lack AII |
| Bindemittel | 50,0 | 50,0 |
| Polyisocyanat | 13,1* | 13,0* |
| Methoxypropylacetat (MPAC) | 13,1* | 13,0* |
| Summe | 76,2 | 76,0 |
| berechneter Festkörper-Massenanteil | 32,9 % | 32,9 % |
| Topfzeit ("pot life") | ca. 3 h | ca. 2 h |
| Verarbeitungshinweis | *Mischung aus MPAC und Polyisocyanat langsam unter Rühren zugeben, 5 min einrühren. | *Mischung aus MPAC und Polyisocyanat langsam unter Rühren zugeben, 5 min einrühren. |
| Aufzug auf Substrat (Kaltgewalztes Feinblech 0,75 mm ST 14.03) | | |
| Schichtstärke naß | 80 µm | 80 µm |
| Einbrennbedingung (t bei jeweils 80 °C; 150 °C; 200 °C) | 30 min ; 15 min ; 15 min | 30 min ; 15 min ; 15 min |
| Trockenschichtstärke in µm | 10 ; 10 ; 10 | 9 ; 9 ; 9 |
| Gitterschnitt DIN EN ISO 2409/1 mm | Gt 0; Gt 0; Gt 0 | Gt 0 ; Gt 0 ; Gt 0 |
| Schlagprüfung (Impact n. ASTM 2794) direkt in in·lb | 80 ; 80 ; 80 | 80 ; 80 ; 80 |
| Schlagprüfung (Impact n. ASTM 2794) indirekt in in·lb | 80 ; 80 ; 80 | 80 ; 80 ; 60 |
| Aufzug auf Glasplatte | | |
| Schichtstärke naß | 100 µm | 100 µm |
| Einbrennbedingung (t bei jeweils 80 °C; 150 °C ; 200 °C) | 30 min ; 15 min ; 15 min | 30 min ; 15 min ; 15 min |
| Trockenschichtstärke in µm | 18 ; 18 ; 17 | 18 ; 18 ; 17 |
| Pendelhärte nach König DIN 53157 in s | 165 ; 184 ; 194 | 166 ; 196 ; 204 |
| Acetontest (Filmerweichung nach Einwirkzeit) | 10 s ; 5 min ; > 10 min | 10 s ; 4 min ; > 10 min |

*Das Polyisocyanat wird vor dem Zumischen mit Methoxypropylacetat (MPAC) verdünnt.

Die anionisch über das Phosphation stabilisierten Bindemittel zeigten im Vergleich zu den kationisch stabilisierten Bindemitteln das günstigste Verhalten in Bezug auf Topfzeit (pot life) und Applizierung. Hervorzuheben ist die hervorragende Flexibilität der Filme bei gleichzeitig hoher Pendelhärte und ausgezeichnete Acetonbeständigkeit ab 200°C Einbrenntemperatur.

| Nichtionisch stabilisierte Epoxidaddukte : | | | |
|---|---|---|---|
| Epoxid-Dispersion gemäß Beispiel | N 1 | N 1 | N 1 |
| Polyisocyanat | Bayhydur VP LS 2150/2 | Bayhydur VP LS 2219 | Bayhydur B 3100 |
| Verhältnis der Stoffmengen der reaktiven Gruppen $n$ (OH) : $n$(NCO) | 1 : 1,25 | 1 : 1,25 | 1 : 1,25 |
| Rezeptur | Lack N I | Lack N II | Lack N III |
| Bindemittel | 50,0 | 50,0 | 50,0 |
| Polyisocyanat | 31,9* | 17,3* | 17,4* |
| Methoxypropylacetat (MPAC) | 12,7* | 17,3* | 17,4* |
| voll entsalztes Wasser | 20,0 | 10,0 | 10,0 |
| Verlaufmittel | 3,0 | 3,0 | 3,0 |
| Summe | 117,6 | 97,6 | 97,8 |
| berechneter Festkörper-Massenanteil | 41,5 % | 44,9 % | 44,90 % |
| Topfzeit ("pot life") | 3,5 h | 3 h | 3 h |
| Verarbeitungshinweis | *Mischung aus MPAC und Polyisocyanat langsam unter Rühren zugeben, 5 min rühren. | *Mischung aus MPAC und Polyisocyanat langsam unter Rühren zugeben, 5 min rühren. | *Mischung aus MPAC und Polyisocyanat langsam unter Rühren zugeben, 5 min rühren. |
| Aufzug auf Substrat (Kaltgewalztes Feinblech 0,75 mm ST 14.03) | | | |
| Schichtstärke naß in µm | 80 | 80 | 80 |
| Einbrennbedingung (t bei 200 °C ; 240 °C in min) | 15 ; 15 | 15; 15 | 15 ; 15 |
| Trockenschichtstärke in µm | 14; 11 | 16 ; 12 | 16 ; 15 |
| Gitterschnitt DIN EN ISO 2409 /1 mm | Gt 0 ; Gt 0 | Gt 0 ; Gt 0 | Gt 0 ; Gt 0 |
| Schlagprüfung (Impact n. ASTM 2794, direkt) in in·lb | 60 ; 40 | 80 ; 80 | 80 ; 80 |
| Schlagprüfung (Impact n. ASTM 2794 indirekt) in in·lb | 80 ; 20 | 80 ; 40 | 80 ; 80 |
| Aufzug auf Glasplatte | | | |
| Schichtstärke naß in µm | 100 | 100 | 100 |
| Trockenschichtstärke in µm | 18 | 20 | 20 |
| Einbrennbedingung (t bei 200 °C ; 240 °C in min) | 15 min; 15 min | 15 min; 15 min | 15 min; 15 min |

* Das Polyisocyanat wird vor dem Zumischen mit Methoxypropylacetat (MPAC) verdünnt.

(fortgesetzt)

| Nichtionisch stabilisierte Epoxidaddukte : | | | |
|---|---|---|---|
| Epoxid-Dispersion gemäß Beispiel | N 1 | N 1 | N 1 |
| Pendelhärte nach König DIN 53157 in s | 227 ; 240 | 214 ; 225 | 205 ; 215 |
| Acetontest (Filmerweichung nach Einwirkzeit) | 6 min ; > 10 min | 20 s ; 3 min | 20 s ; 2 min |

**Patentansprüche**

1. Zweikomponentensysteme auf Basis von in Wasser dispergierten hydrophilen Epoxid-Addukten **Ah** mit Hydroxylgruppen als reaktiven Gruppen und unblockierten zwei- oder mehrfunktionellen Isocyanaten **B**, wobei die hydrophilen Epoxidaddukte **Ah** ausgewählt sind aus kationisch stabilisierten hydrophilen Epoxid-Addukten **Ak**, anionisch stabilisierten hydrophilen Epoxidaddukten **Aa** sowie nichtionisch stabilisierten Epoxid-Addukten An und zwitterionisch stabilisierten Epoxid-Amin-Addukten **Aak**, wobei im Fall der kationisch stabilisierten Epoxid-Amin-Addukte Ak nur tertiäre, aber keine primären und sekundären Aminogruppen vorhanden sind, und wobei die vorhandenen tertiären Aminogruppen außerdem sterisch gehindert sind.

2. Zweikomponentensysteme nach Anspruch 1, **dadurch gekennzeichnet, daß** als kationisch stabilisierte Epoxid-Addukte **Ak** Addukte von Epoxidharzen **A1** mit einem spezifischen Epoxidgruppen-Gehalt von 300 bis 11 500 mmol/kg und Aminen **A2** eingesetzt werden, wobei die Amine **A2** eine primäre oder sekundäre Aminogruppe pro Molekül, aber keine tertiäre Aminogruppe aufweisen, und wobei das Addukt **Ak** ausschließlich solche tertiären Aminogruppen enthält, die sich bei der Additionsreaktion aus der Aminkomponente **A2** und der Epoxidkomponente **A1** bilden.

3. Zweikomponentensysteme nach Anspruch 2, **dadurch gekennzeichnet, daß** als Amine **A2** sekundäre Monoamine der Formel $R^1R^2NH$ eingesetzt werden, wobei $R^1$ und $R^2$ unabhängig voneinander ausgewählt sind aus der Gruppe der linearen, verzweigten und cyclischen Alkylreste mit 1 bis 20 Kohlenstoffatomen, die gegebenenfalls mindestens eine primäre Hydroxylgruppe tragen.

4. Zweikomponentensysteme nach Anspruch 2, **dadurch gekennzeichnet, daß** als Amine **A2** primäre Monoamine $R^3NH_2$ eingesetzt werden, wobei $R^3$ ausgewählt ist aus linearen, verzweigten und cyclischen Alkylgruppen mit 2 bis 20 Kohlenstoffatomen, mit der Maßgabe, daß $R^3$ mindestens eine primäre Hydroxylgruppe trägt, die in α- oder β-Stellung zur primären Aminogruppe steht.

5. Zweikomponentensysteme nach Anspruch 1, **dadurch gekennzeichnet, daß** als anionisch stabilisierte Epoxidaddukte **Aa** Reaktionsprodukte von Epoxidharzen **A1** mit einem spezifischen Epoxidgruppen-Gehalt von 300 bis 11 500 mmol/kg mit mehrbasigen Säuren **A3** ausgewählt aus Phosphorsäure, Alkylphosphonsäuren $R^4PO_3H_2$ mit 1 bis 18, bevorzugt 1 bis 4 Kohlenstoffatomen in der Alkylgruppe $R^4$, Arylphosphonsäuren und Hydroxyalkylphosphonsäuren mit bevorzugt 1 bis 4 Kohlenstoffatomen in der Alkylgruppe, sowie den entsprechenden Phosphonigsäuren $R^4 PO_2H_2$, gegebenenfalls unter Zusatz geringer Mengen von Wasser, eingesetzt werden.

6. Zweikomponentensysteme nach Anspruch 5, **dadurch gekennzeichnet, daß** die Säurezahl des Epoxid-Säure-Addukts **Aa** zwischen 15 und 200 mg/g liegt, und daß das Epoxid-Säure-Addukt **Aa** zu 10 bis 100 % neutralisiert ist.

7. Zweikomponentensysteme nach Anspruch 5, **dadurch gekennzeichnet, daß** statt der Epoxidharze **A1** oder in Mischung mit diesen modifizierte Epoxide **A16** eingesetzt werden, die durch Reaktion der Epoxide **A1** mit Monocarbonsäuren ausgewählt aus aliphatischen Carbonsäuren mit 2 bis 40 Kohlenstoffatomen erhältlich sind.

8. Zweikomponentensysteme nach Anspruch 1, **dadurch gekennzeichnet, daß** als zwitterionisch stabilisierte Epoxidaddukte **Aak** Umsetzungsprodukte eingesetzt werden von Epoxid-Amin-Addukten **A18** und hydrolysierten Additionsprodukten **A12h**, die erhältlich sind durch Addition von Maleinsäureanhydrid **A123** und mindestens einer Komponente ausgewählt aus trocknenden Ölen **A121** und ungesättigten Fettsäuren **A122** zu einem Addukt **A12** und anschließend Hydrolyse der Säureanhydridgruppen durch Einwirkung von Wasser oder Monoalkoholen, und anschließende Kondensation von **A12h** und einem Hydroxylgruppen enthaltenden Epoxid-Amin-Addukt **A18**, das erhältlich ist durch Umsetzung von Epoxiden **A1** mit einem spezifischen Epoxidgruppen-Gehalt von 300 bis 11 500 mmol/kg und sekundären Aminen **A8** ausgewählt aus sekundären aliphatischen Aminen mit linearen, verzweigten oder cyclischen Alkylresten.

9. Zweikomponentensysteme nach Anspruch 8, **dadurch gekennzeichnet, daß** die Säurezahl des Kondensats **Aak** 10 bis 100 mg/g beträgt.

10. Zweikomponentensysteme nach Anspruch 1, **dadurch gekennzeichnet, daß** ein anionisch stabilisiertes Epoxidharz **Aa**, erhältlich durch Umsetzung in einer zweistufigen Reaktion einer Hydroxy-, Mercapto- oder Aminosäure **A4** mit einem mindestens difunktionellen Isocyanat **A5** zu einem Zwischenprodukt **A45** mit mindestens einer Säuregruppe und mindestens einer Isocyanatgruppe, und Reaktion dieses Zwischenprodukts in der zweiten Stufe mit einem Hydroxylgruppen-haltigen Epoxidharz **A14**, wobei die Mengenverhältnisse so gewählt werden, daß die Isocyanatgruppen in dieser zweiten Stufe vollständig verbraucht werden, eingesetzt wird.

11. Zweikomponentensysteme nach Anspruch 1, **dadurch gekennzeichnet, daß** als nichtionisch modifizierte Epoxidharze **An** solche Epoxidharze eingesetzt werden, die Segmente von Oxyalkylengruppen enthalten, wobei die Oxyalkylensegmente einen Massenanteil von mindestens 20 % an Oxyäthylengruppen aufweisen.

12. Verwendung von Zweikomponentensystemen nach Anspruch 1 als Bindemittel für Lacke.

13. Verwendung von Zweikomponentensystemen nach Anspruch 1 als Bindemittel für Lacke für die Innenlackierung von Gebinden, die mit Chemikalien in Berührung kommen.

14. Gebinde, deren Innenflächen mit einem Lack beschichtet sind, der ein Zweikomponentensystem nach Anspruch 1 enthält.

**Claims**

1. A two-component system based on aqueous dispersions of hydrophilic epoxy adducts **Ah** having hydroxyl groups as reactive groups and unblocked difunctional or polyfunctional isocyanates **B**, said hydrophilic epoxy adducts **Ah** being selected from cationically stabilized hydrophilic epoxy adducts **Ak,** anionically stabilized hydrophilic epoxy adducts **Aa** and also nonionically stabilized epoxy adducts An and zwitterionically stabilized epoxy-amine adducts **Aak,** where, in the case of the cationically stabilized epoxy-amine adducts **Ak,** there are only tertiary but no primary and secondary amino groups present, and where the tertiary amino groups present are, moreover, sterically hindered.

2. The two-component system as claimed in claim 1, wherein adducts of epoxy resins **A1** having a specific epoxy group content of from 300 to 11 500 mmol/kg and amines **A2** are employed as cationically stabilized epoxy adducts **Ak,** the amines **A2** having one primary or secondary amino group per molecule but no tertiary amino group and the adduct **Ak** including exclusively those tertiary amino groups which are formed in the addition reaction from the amine component **A2** and the epoxy component **A1.**

3. The two-component system as claimed in claim 2, wherein the amines **A2** employed are secondary monoamines of the formula $R^1R^2NH$, $R^1$ and $R^2$ being selected independently of one another from the group consisting of linear, branched and cyclic alkyl radicals of 1 to 20 carbon atoms which if desired carry at least one primary hydroxyl group.

4. The two-component system as claimed in claim 2, wherein the amines **A2** employed are primary monoamines $R^3NH_2$, $R^3$ being selected from linear, branched and cyclic alkyl groups of 2 to 20 carbon atoms with the proviso that $R^3$ carries at least one primary hydroxyl group which is positioned $\alpha$ or $\beta$ to the primary amino group.

5. The two-component system as claimed in claim 1, wherein reaction products of epoxy resins **A1** having a specific epoxy group content of from 300 to 11 500 mmol/kg with polybasic acids **A3** selected from phosphoric acid, alkylphosphonic acids $R^4PO_3H_2$ of 1 to 18 carbon atoms, preferably 1 to 4 carbon atoms, in the alkyl group $R^4$, arylphosphonic acids and hydroxyalkylphosphonic acids of preferably 1 to 4 carbon atoms in the alkyl group, and also the corresponding phosphonous acids $R^4PO_2H_2$, with or without the addition of small amounts of water, are employed as anionically stabilized epoxy adducts **Aa.**

6. The two-component system as claimed in claim 5, wherein the acid number of the epoxy-acid adduct **Aa** is between 15 and 200 mg/g and wherein the epoxy-acid adduct **Aa** is neutralized to the extent of from 10 to 100 %.

7. The two-component system as claimed in claim 5, wherein, instead of or in a mixture with the epoxy resins **A1,** modified epoxides **A16** are employed which are obtainable by reacting the epoxides **A1** with monocarboxylic acids selected from aliphatic carboxylic acids of 2 to 40 carbon atoms.

8. The two-component system as claimed in claim 1, wherein reaction products of epoxy-amine adducts **A18** and hydrolyzed addition products **A12h** which are obtainable by addition reaction of maleic anhydride **A123** and at least one component selected from drying oils **A121** and unsaturated fatty acids **A122** to form an adduct **A12** and subsequent hydrolysis of the acid anhydride groups under the action of water or monoalcohols and subsequent condensation of **A12h** and a hydroxyl-containing epoxy-amine adduct **A18** which is obtainable by reacting epoxides **A1** having a specific epoxy group content of from 300 to 11 500 mmol/kg and of secondary amines **A8** selected from secondary aliphatic amines having linear, branched or cyclic alkyl radicals are employed as zwitterionically stabilized epoxy adducts **Aak.**

9. The two-component system as claimed in claim 8, wherein the acid number of the condensation product **Aak** is from 10 to 100 mg/g.

10. The two-component system as claimed in claim 1, wherein an anionically stabilized epoxy resin **Aa** obtainable by reaction in a two-stage reaction of a hydroxy, mercapto or amino acid **A4** with an at least difunctional isocyanate **A5** to form an intermediate **A45** having at least one acid group and at least one isocyanate group and reaction of this intermediate in a second stage with a hydroxyl-containing epoxy resin **A14**, the proportions being chosen such that in this second stage the isocyanate groups are consumed completely, is employed.

11. The two-component system as claimed in claim 1, wherein epoxy resins which include segments of oxyalkylene groups, the oxyalkylene segments having a mass fraction of oxyethylene groups of at least 20 %, are employed as nonionically modified epoxy resins **An**.

12. The use of a two-component system as claimed in claim 1 as a binder for coating materials.

13. The use of a two-component system as claimed in claim 1 as a binder for coating materials for the interior coating of containers which come into contact with chemicals.

14. A container whose interior surfaces are coated with a coating material comprising a two-component system as claimed in claim 1.

**Revendications**

1. Systèmes à deux composants à base d'adduits époxydiques hydrophiles Ah dispersés dans l'eau, avec des groupes hydroxyle en tant que groupes réactifs et des isocyanates difonctionnels ou polyfonctionnels B non bloqués, les adduits époxydiques hydrophiles Ah étant choisis parmi les adduits époxydiques hydrophiles Ak à stabilisation cationique, les adduits époxydiques hydrophiles Aa à stabilisation anionique, ainsi que les adduits époxydiques An à stabilisation non ionique et les adduits époxyde-amine Aak à stabilisation zwittérionique, où, dans le cas des adduits époxyde-amine Ak à stabilisation cationique, seuls sont présents des groupes amino tertiaires, mais non pas des groupes amino primaires et secondaires, les groupes amino tertiaires présents présentant par ailleurs un empêchement stérique.

2. Systèmes à deux composants selon la revendication 1, **caractérisés en ce que**, en tant qu'adduits époxydiques Ak à stabilisation cationique, on utilise des adduits de résines époxydes A1 ayant une teneur spécifique en groupes époxyde de 300 à 11 500 mmol/kg et d'amines A2, les amines A2 comportant un groupe amino primaire ou secondaire par molécule, mais aucun groupe amino tertiaire, l'adduit Ak contenant exclusivement des groupes amino tertiaires qui se forment lors de la réaction d'addition du composant amine A2 et du composant époxyde A1.

**3.** Systèmes à deux composants selon la revendication 2, **caractérisés en ce qu'**on utilise en tant qu'amines A2 des monoamines secondaires de formule $R^1R^2NH$, dans laquelle $R^1$ et $R^2$ sont choisis indépendamment l'un de l'autre dans l'ensemble des radicaux alkyle à chaîne droite ou ramifiée, et cycliques, ayant de 1 à 20 atomes de carbone, qui éventuellement portent au moins un groupe hydroxyle primaire.

**4.** Systèmes à deux composants selon la revendication 2, **caractérisés en ce qu'**on utilise en tant qu'amines A2 des monoamines primaires $R^3NH_2$ dans lesquels $R^3$ est choisi parmi les groupes alkyle à chaîne droite ou ramifiée, et cycliques ayant de 2 à 20 atomes de carbone, à la condition que $R^3$ porte au moins un groupe hydroxyle primaire qui est en position $\alpha$ ou $\beta$ par rapport au groupe amine primaire.

**5.** Systèmes à deux composants selon la revendication 1, **caractérisés en ce qu'**on utilise en tant qu'adduits époxydiques Aa à stabilisation anionique des produits de la réaction de résines époxydes A1 ayant une teneur spécifique en groupes époxyde de 300 à 11 500 mmol/g avec des polyacides A3 choisis parmi l'acide phosphorique, les acides alkylphosphoniques $R^4PO_3H_2$ ayant de 1 à 18 et de préférence de 1 à 4 atomes de carbone dans le groupe alkyle $R^4$, les acides arylphosphoniques et les acides hydroxyalkylphosphoniques ayant de préférence de 1 à 4 atomes de carbone dans le groupe alkyle, ainsi que les acides phosphoneux correspondants $R^4PO_2H_2$, éventuellement avec addition de faibles quantités d'eau.

**6.** Systèmes à deux composants selon la revendication 5, **caractérisés en ce que** l'indice d'acide de l'adduit époxyde-acide Aa est compris entre 15 et 200 mg/g, et que l'adduit époxyde-acide Aa est neutralisé jusqu'à 10 à 100 %.

**7.** Systèmes à deux composants selon la revendication 5, **caractérisés en ce que**, au lieu des résines époxyde A1, ou en mélange avec ces dernières, on utilise des époxydes modifiés A16, qui peuvent être obtenus par réaction des époxydes A1 avec des acides monocarboxyliques choisis parmi les acides carboxyliques aliphatiques ayant de 2 à 40 atomes de carbone.

**8.** Systèmes à deux composants selon la revendication 1, **caractérisés en ce qu'**on utilise en tant qu'adduits époxydiques Aak à stabilisation zwittérionique des produits de réaction d'adduits époxyde-amine A18 et de produits d'addition hydrolysés A12h, que l'on peut obtenir par addition d'anhydride maléique A123 et d'au moins un composant choisi parmi les huiles siccatives A121 et les acides gras insaturés A122 pour donner un adduit 112, puis hydrolyse des groupes anhydride d'acide sous l'action de l'eau ou de monoalcools, puis condensation du composé A12h et d'un adduit époxyde-amine A18 contenant des groupes hydroxyle, qui peut être obtenu par réaction d'époxydes A1 ayant une teneur spécifique en groupes époxyde de 300 à 11 500 mmol/kg et d'amines secondaires A8 choisies parmi les amines aliphatiques secondaires comportant des radicaux alkyle à chaîne droite ou ramifiée, ou cycliques.

**9.** Systèmes à deux composants selon la revendication 8, **caractérisés en ce que** l'indice d'acide du condensat Aak est de 10 à 100 mg/g.

**10.** Systèmes à deux composants selon la revendication 1, **caractérisés en ce qu'**on utilise une résine époxyde Aa à stabilisation anionique, pouvant être obtenue par une conversion dans le cadre d'une réaction en deux étapes d'un hydroxyacide, d'un mercapto-acide ou d'un acide aminé A4 avec un isocyanate au moins difonctionnel A5 pour donner un produit intermédiaire A45 ayant au moins un groupe acide et au moins un groupe isocyanate, et réaction de ce produit intermédiaire dans la deuxième étape avec une résine époxyde A14 contenant des groupes hydroxyle, les rapports pondéraux étant choisis de façon que les groupes isocyanate soient entièrement consommés dans cette deuxième étape.

**11.** Systèmes à deux composants selon la revendication 1, **caractérisés en ce qu'**on utilise en tant que résines époxydes An à modification non ionique des résines époxydes qui contiennent des segments de groupes oxyalkylène, les segments oxyalkylène comportant une proportion en masse d'au moins 20 % de groupes oxyéthylène.

**12.** Utilisation de systèmes à deux composants selon la revendication 1 en tant que liants pour peintures et vernis.

**13.** Utilisation de systèmes à deux composants selon la revendication 1 en tant que liants pour peintures et vernis pour le laquage intérieur de bidons entrant en contact avec des produits chimiques.

**14.** Bidons dont les surfaces intérieures sont revêtues d'un vernis qui contient un système à deux composant selon la revendication 1.